# EUROPÄISCHE PATENTSCHRIFT

(11) **EP 2 850 351 B1**
(45) Veröffentlichungstag und Bekanntmachung des Hinweises auf die Patenterteilung: **27.07.2016**
(21) Anmeldenummer: 13725567.5
(22) Anmeldetag: 03.05.2013
(51) Int. Cl.: F16K 1/44, F16K 41/12

(54) **VENTIL UND MEMBRAN FÜR EIN VENTIL**
VALVE AND DIAPHRAGM FOR A VALVE
SOUPAPE ET DIAPHRAGME DE SOUPAPE

(30) Priorität: 15.05.2012 DE 102012009585
(43) Veröffentlichungstag der Anmeldung: 25.03.2015
(73) Patentinhaber: GEA Tuchenhagen GmbH, 21514 Büchen (DE)
(72) Erfinder: SÜDEL, Matthias, 23626 Ratekau (DE); PIEPLOW, Jörg, 23564 Lübeck (DE)
(74) Vertreter: Mönkemeyer, Philipp
(86) Internationale Anmeldenummer: PCT/EP2013/001315
(87) Internationale Veröffentlichungsnummer: WO 2013/170931

(56) Entgegenhaltungen:
- EP-A1- 1 553 473
- EP-A2- 1 953 436
- DE-A1-102007 014 282
- DE-U1- 20 211 511
- GB-A- 2 224 335
- US-A- 4 171 792
- US-A1- 2007 120 086

## Beschreibung

Die Erfindung betrifft eine Ventil nach dem Oberbegriff des Anspruchs 1 und eine Membran für ein Ventil nach dem Oberbegriff des Anspruchs 15, wie beispielsweise aus Dokument US-A-2007/0120086 bekannt.

Ventile sind wichtige Komponenten in Prozessanlagen, mit deren Hilfe Ströme von Produktmedien durch Rohrleitungssysteme der produktführenden Anlage gelenkt werden. Die Lenkwirkung beruht dabei auf der Schaltfunktion der Ventile.

Ein Ventil besitzt ein Ventilgehäuse mit wenigstens einem ersten und einem zweiten Anschluss. Im Ventil der gattungsgemäßen Art ist eine Schließgliedanordnung mit einem Schließglied vorgesehen, welches entlang einer axialen Richtung bewegbar ist. Im Rahmen dieser axialen Bewegbarkeit ist es in eine Schließstellung bringbar, in welcher es mit einem zwischen den Anschlüssen angeordneten Ventilsitz dichtend zusammenwirkt, wodurch eine Fluidverbindung zwischen erstem und zweitem Anschluss unterbunden ist. Die axiale Bewegung des Schließglieds kann von außerhalb des Ventilgehäuses bewirkt werden. In der Regel kommt hierbei ein druckmittelbetriebener Antrieb zum Einsatz, in welchem das Druckmittel einen Druck auf einen Kolben gegen die rückstellende Kraft einer Feder ausübt.

Besondere Anforderungen an das Ventil stellen aseptische Anwendungen, beispielsweise in der Lebensmittelindustrie. In solchen Anwendungen ist der Kontakt des Produkts mit Umgebungsluft zu vermeiden, da sonst Bakterien und Keime in das Produkt eingeschleppt werden können. Entsprechend aufwändig ist die Gestaltung der Abdichtung im Ventil. Hierzu zählt die Abdichtung der Schließgliedanordnung gegen die Umgebung des Gehäuses, insbesondere dort, wo die Schließgliedanordnung an den Antrieb angebunden ist.

Die DE 102007014282 A1 schlägt hier eine fluidundurchlässige Membran vor, welche an der Schließgliedanordnung einerseits und einer ventilgehäuseseitigen Halteanordnung andererseits mit Dichtwirkung gehaltert ist. Die Halteanordnung besitzt einen schräg zur axialen Richtung ausgerichteten Klemmspalt. Die Membran umfasst einen in diesem Klemmspalt verlaufenden Klemmabschnitt und eine Zentralöffnung, die von der Schließgliedanordnung durchsetzt ist. Die Dichtwirkung ergibt sich durch Halterung der Zentralöffnung an der Schließgliedanordnung und des Klemmabschnitts im Klemmspalt. Im Gegensatz zu den bekannten Materialien auf Basis von Elastomeren ist diese Membran aus einem formstabilen Kunststoff gefertigt, der zumindest bis etwa 130°C temperaturbeständig ist. Hierdurch soll eine konstante Geometrie unter Betriebsbedingungen, insbesondere Betriebsdruck und Betriebstemperatur, erreicht werden. Zusammen mit Einspannung der Membran im Klemmspalt sollen sich eine hohe Lagestabilität und insgesamt eine gute Abdichtung ergeben.

Die DE 102007014282 A1 lehrt, die Abdichtung weiter zu verbessern, indem im Klemmspalt ein Vorsprung vorgesehen ist, der die Klemmkraft erhöht.

Es ist die Aufgabe der Erfindung, ein Ventil mit Membran und eine Membran zu schaffen, die die ventilgehäuseseitige Abdichtung der Membran gegenüber dem Stand der Technik weiter verbessern und dadurch die Notwendigkeit zur Wartung verringern.

Diese Aufgabe wird gelöst durch ein Ventil mit den Merkmalen des Anspruchs 1 und einer Membran mit den Merkmalen des Anspruchs 15. Die abhängigen Ansprüche 2 bis 14 und 16, 17 geben vorteilhafte Weiterbildungen an, deren aufgeführte Wirkungen die Gesamtvorteile erhöhen.

Die Membran gemäß Erfindung besitzt einen ersten Abschnitt, der an einem radial äußeren Rand der Membran angeordnet ist und an den sich radial einwärts ein zweiter Abschnitt anschließt. Beide Abschnitte sind winklig zueinander angeordnet. Der erste Abschnitt ist in der Halteanordnung der Membran geklemmt, der zweite Abschnitt hingegen wenigstens geführt. Der Winkel zwischen den Abschnitten ist so bemessen, dass sich zwischen Halteanordnung und den Abschnitten ein Formschluss ergibt. Die Abschnitte der Membran und der Winkel zwischen ihnen können vorgeformt sein, vorzugsweise nahe an dem Winkel, der in Halteanordnung ausgebildet ist. Durch die Klemmung des ersten Abschnitts werden die Klemmkräfte, die die Positionierung der Membran bewirken, insgesamt erhöht und es werden größere Flächenanteile der Membran über Klemmung fixiert, so dass im Zusammenwirken ein Verrutschen der Membran im Klemmspalt stark verringert wird. Der Formschluss verstärkt diesen Effekt erheblich, so dass durch das Zusammenwirken von Klemmspalt, Formschluss und Kraftschluss mit dem ersten Abschnitt die Membran in allen Betriebsbedingungen in der Halteanordnung ortsfest bleibt. Der äußere Rand der Membran ist über den Kraftschluss von erstem Abschnitt und Halteanordnung zudem sehr gut und besser als im Stand der Technik abgedichtet. Dies ist von großem Vorteil und verringert die Notwendigkeit zur Wartung, denn die Erfinder fanden heraus, dass durch Bewegung der Membran in der Halteanordnung, insbesondere im Klemmspalt, Produkt in die Halteanordnung, insbesondere den Klemmspalt, hineingezogen wird. Diese Kontamination kann einerseits über den Produktraum im Ventil, andererseits über die Gehäuseumgebung erfolgen. Dies wird durch die erfindungsgemäße Ausgestaltung von Membran und Ventil zuverlässig verhindert.

In einer Weiterbildung des Ventils beträgt der Winkel zwischen erstem und zweitem Abschnitt zwischen 60° und 135°. Dies bewirkt einen guten Formschluss und hält die Materialbelastung durch Verformung bei Herstellung der Membran oder bei Einbau einer abweichend vorgeformten Membran in die Halteanordnung gering.

In einer anderen Weiterbildung wird vorgeschlagen, den ersten Abschnitt in einer zur axialen Richtung etwa senkrechten Ebene anzuordnen. Ist die Membran auf diese Weise sich im ersten Abschnitt im Wesentlichen flach radial nach außen erstreckend, auch unter Duldung einiger Winkelgrade Abweichung, ergibt sich ein kostengünstiger Aufbau mit leicht einstellbaren Klemmkräften.

Eine wiederum andere Weiterbildung sieht vor, den zweiten Abschnitt im Wesentlichen zylindrisch mit einer Zylinderachse zu formen, wobei die Zylinderachse in axialer Richtung orientiert ist, worin Abweichungen im Rahmen von Fertigungsgenauigkeiten und einige Winkelgrade Abweichung eingeschlossen sind. Dies führt zu einer kostengünstig herstellbaren Halteanordnung mit guten Führungseigenschaften für den zweiten Abschnitt.

Die Erfindung kann durch wenigstens einen in der Membran zwischen Klemmabschnitt und erstem Abschnitt vorgesehen Durchlass weitergebildet werden, wobei der Durchlass mit einem in der ventilgehäuseseitigen Halteanordnung ausgebildeten Kanal zusammenwirkt. Dieser Durchlass kann beispielsweise in Form mehrerer über den Umfang verteilt angeordneter Durchlassöffnungen ausgebildet werden, die fluidgängig miteinander in Verbindung stehen, beispielsweise mittels einer ringförmigen Nut im Ventilgehäuse und/oder im zweiten Gehäuseteil. Mit dieser Maßnahme wird etwaig doch aus dem Ventilinnenraum in die Halteanordnung, beispielsweise den Klemmabschnitt, eintretendes Material sichtbar, indem es durch den Durchlass in der Membran hindurch nach außen geführt wird.

In einer Weiterbildung ist vorgesehen, die Halteanordnung mit einem ersten und einem zweiten Spalt zu versehen, wobei der erste Spalt einen Kraftschluss mit dem ersten Abschnitt der Membran ausbildet und der zweite Spalt den zweiten Abschnitt führt. Mit dieser Ausgestaltung der Halteanordnung werden die bereits genannten Vorteile kostengünstig erreicht und zudem die Materialbelastung für die Membran besonders gering gehalten.

Eine andere Weiterbildung betrifft die Ausgestaltung des ersten Spaltes und sieht vor, diesen Spalt mit einer ersten und einer zweiten Wand zu begrenzen, wobei wenigstens eine der Wände eine Struktur aufweist, die die Reibung der Membran im Spalt erhöht, beispielsweise eine Nut, einen Vorsprung, eine Welligkeit oder dergleichen. Auf diese Weise wird die Membran noch besser durch erhöhten Reibschluss oder bis in den Formschluss gehende Verzahnung von Membran und Spalt in ihrer Position festgelegt und die Dichtigkeit erhöht.

Eine nächste Weiterbildung betrifft die Ausgestaltung des ersten Klemmspaltes und sieht vor, diesen Klemmspalt mit einer ersten und einer zweiten Klemmspaltwand zu begrenzen, wobei wenigstens eine der Wände Struktur aufweist, die die Reibung der Membran im Klemmspalt erhöht, beispielsweise eine Nut, einen Vorsprung, eine Welligkeit oder dergleichen. Auf diese Weise wird die Membran noch besser durch erhöhten Reibschluss oder bis in den Formschluss gehende Verzahnung von Membran und Klemmspalt in ihrer Position festgelegt und die Dichtigkeit erhöht.

In einer vorteilhaft kostengünstigen Weiterbildung ist am Ventil ein druckmittelbetriebener, beispielsweise pneumatischer, Antrieb vorgesehen, welcher mit der Schließgliedanordnung verbunden ist, um die Bewegung des Schließgliedes entlang der axialen Richtung zu bewirken.

Im Zusammenspiel mit einem druckmittelbetriebenen Antrieb schlägt eine nächste Weiterbildung vor, eine Drehentkopplungseinrichtung im Antrieb oder zwischen Antrieb und Schließgliedanordnung vorzusehen. Druckmittelbetriebene Antriebe erzeugen oftmals durch eine wendelförmige Feder eine Torsionskraft. Die Übertragung der Torsionskraft auf die Membran wird mittels Drehentkopplungseinrichtung verhindert, so dass die Lebensdauer der Membran aufgrund des Wegfalls der Torsionsbeanspruchung steigt.

Gemäß einer wiederum anderen Weiterbildung wird eine kostengünstige Ausgestaltung der Drehentkopplung vorgeschlagen. Nach dieser ist die Drehentkopplungseinrichtung zwischen Antrieb und Schließgliedanordnung angeordnet und umfasst ein erstes Entkopplungselement in einer zylindrischen Aufnahme, in der ein zylindrischer Fortsatz eines zweiten Entkopplungselements aufgenommen ist.

Eine vorteilhafte Entlastung der Membran, die Schädigungen und damit einhergehende Keimeintragsmöglichkeiten deutlich verringert sowie die Lebensdauer erhöht, wird mit einer weiteren Weiterbildung erreicht. Gemäß dieser sind gehäuseseitig eine erste Stützfläche und an der Schließgliedanordnung eine zweite Stützfläche jeweils für die Membran vorgesehen. Durch wenigstens abschnittsweises Auflegen der Membran auf eine der Stützflächen wird die Drucklast und damit auch die Zugkräfte verringert, die auf den in der Halteanordnung befindlichen Teil der Membran einwirken und auf eine Verschiebung dieses Teils in der Halteanordnung hinwirken.

Gemäß einer Weiterbildung der Anordnung mit Stützflächen ist vorgesehen, dass in einer Offenstellung des Schließgliedes, in der eine Fluidverbindung zwischen erstem Anschluss und zweitem Anschluss hergestellt ist, und der Schließstellung die Membran auf je einer der Stützflächen aufliegt, wobei sie insgesamt zu wenigstens 50% ihrer Fläche abgestützt ist. Eine Abstützung dieses Flächenanteils der Membran hat sich als besonders vorteilhaft erwiesen, um die vorgenannten Vorteile hinsichtlich Reinheit und Lebensdauer zu erhöhen.

Eine nächste Weiterbildung betrifft das Material der Membran und sieht vor, dass die Membran eine Kompressibilität von wenigstens 20% nach dem Standard ASTM F36 "Standard Test Method for Compressibility and Recovery of Gasket Materials" in der Fassung von 2009 aufweist. Es wurde festgestellt, dass auf diese Weise eine dauerhafte Formstabilität erreicht wird, die den Formschluss lange unterstützt, sowie Klemmkräfte und Dichtwirkung erhöht werden.

Eine Membran für ein Ventil, insbesondere der Lebensmittel- oder Prozesstechnologie, welches ein Ventilgehäuse, eine Schließgliedanordnung, eine ventilgehäuseseitige Halteanordnung zum Haltern der Membran und einen schräg zu einer axialen Richtung verlaufenden Klemmspalt fü die Membran umfasst, wobei die Membran einen zur Aufnahme im Klemmspalt geeigneten konischen Abschnitt und eine von der Schließgliedanordnung durchsetzbare Zentralöffnung aufweist, erreicht die für das erfindungsgemäße Ventil genannten Vorteile. Vertieft werden diese dadurch, dass an einem radial äußeren Rand der Membran ein erster Abschnitt vorgesehen ist, an dem sich radial innen ein zweiter Abschnitt anschließt, welcher in einem Winkel zu dem ersten Abschnitt steht, der so bemessen ist, dass erster Abschnitt und zweiter Abschnitt unter Ausbildung eines Formschlusses in der Halteanordnung aufnehmbar sind. Diese Art der Formgebung, die im Herstellungsprozess der Membran und vor Einbau in ein Ventil geschaffen wird, reduziert die Belastung der Membran im eingebauten Zustand, da statt dauerhafter Verformung eine Vorformung während des Herstellungsprozesses erfolgt. Eine anhaltende, starke Belastung wird auf diese Weise verhindert, mithin die Lebensdauer gesteigert sowie Dichtheit und Sauberkeit verbessert.

In einer Weiterbildung der Membran beträgt der Winkel zwischen erstem und zweitem Abschnitt zwischen 60° und 135°. Diese Art der Vorformung während der Herstellung bewirkt einen guten Formschluss nach Einbau in ein Ventil und hält die Materialbelastung durch Verformung während des Einbaus in eine Halteanordnung im Ventil vorteilhaft gering.

Die erfindungsgemäss beanspruchte Membran sieht wenigstens einen Durchlass im zweiten Abschnitt vor, so dass eine Positionierung des Durchlasses zwischen Klemmstellen der Halteanordnung entsteht. Vorteilhaft wird bewirkt, dass etwaig doch in die Halteanordnung eintretendes Material durch den Durchlass hindurchtritt und so sichtbar wird.

Eine nächste Weiterbildung der Membran sieht vor, dass die Membran ein Material umfasst mit einer Kompressibilität von wenigstens 20% nach ASTM F36. Es wurde festgestellt, dass auf diese Weise eine dauerhafte Formstabilität erreicht wird, die den Formschluss lange unterstützt, sowie Klemmkräfte und Dichtwirkung erhöht werden.

Anhand eines Ausführungsbeispiels und seiner Weiterbildungen sollen die Erfindung näher erläutert und die Darstellung der Wirkungen und Vorteile vertieft werden.

Es zeigen:
- Fig. 1:: Längsschnitt durch ein Ventil und schematischer Teilschnitt durch einen mit dem Ventil gekoppelten Antrieb;
- Fig. 2:: Detailansicht des in Fig. 1 gestrichelt eingerahmten Bereichs des Ventils;
- Fig. 3:: schematische und geschnittene Darstellung der Halteanordnung, die die Membran gehäuseseitig haltert;
- Fig. 4:: Schnitt durch die Membran entlang der Längsachse;
- Fig. 5:: Schnitt durch das Ventil im Bereich der Membran in offener Stellung der Schließgliedanordnung; und
- Fig. 6:: Schnitt durch das Ventil im Bereich der Membran in geschlossener Stellung der Schließgliedanordnung.

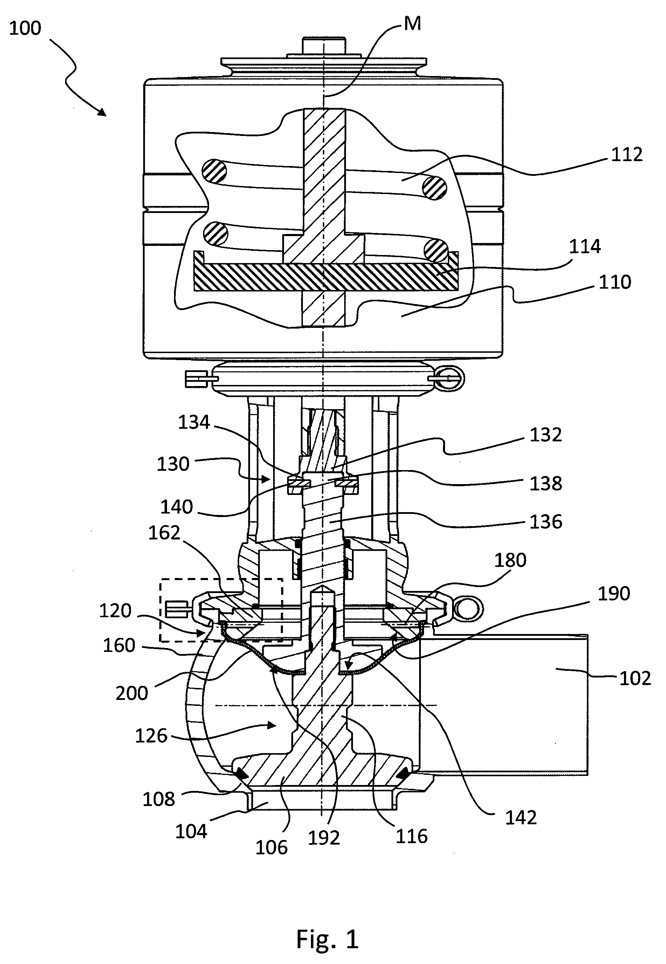

In einer teilweise längsgeschnittenen Ansicht ist in Fig. 1 ein Ventil 100 dargestellt. Es besitzt einen ersten Anschluss 102 und einen zweiten Anschluss 104, welche mit Rohrleitungen, beispielsweise einer lebensmitteltechnischen Prozessanlage, verbindbar sind. Innerhalb eines Ventilgehäuses 160 ist ein Schließglied 106 vorgesehen, welches in dichtenden Kontakt mit einem Ventilsitz 108 bringbar ist, welcher zwischen erstem und zweitem Anschluss 102 und 104 angeordnet ist. Durch diesen Kontakt von Ventilsitz 108 und Schließglied 106 wird eine Schließstellung geschaffen. Die Dichtwirkung unterbindet eine Fluidverbindung und damit einen Produktfluss zwischen erstem und zweitem Anschluss 102 und 104. In einer Offenstellung des Ventils 100 sind Schließglied 106 und Ventilsitz 108 voneinander getrennt, so dass die Fluidverbindung zwischen erstem und zweitem Anschluss 102 und 104 hergestellt ist und Produkt zwischen den beiden Anschlüssen 102 und 104 strömen kann.

Die Bewegung des Schließgliedes 106 von der Offenstellung in die Schließstellung und umgekehrt wird von einem Antrieb 110 bewirkt. Dieser ist im Beispiel druckmittelbetrieben ausgeführt. Ein Druckmittel bewegt einen Kolben 114 gegen die Kraft einer Feder 112, welche eine Rückstellung des Kolbens 114 bewirkt. Der Kolben 114 ist durch ein geeignetes Mittel, beispielsweise einer Ventilstange, mit dem Schließglied 106 gekoppelt. Die Bewegungsrichtung des Schließgliedes 106 legt eine axiale Richtung M fest. Gemäß Fig. 1 wird durch Druckmittelbeaufschlagung der Kolben 114 so entlang der axialen Richtung M bewegt, dass die Offenstellung erreicht wird. Die Feder 112 hingegen erzeugt die Schließstellung.

Die Wirkweise des Antriebs 110 kann auch umgekehrt ausgeführt sein, so dass das Schließglied 106 durch die Kraft der Feder 112 in Offenstellung gehalten wird und bei Druckbeaufschlagung die Schließstellung erzeugt wird.

Die Feder 112 zum Erzeugen der Gegenstellkraft kann mit einer zweiten Aktorik zusammenwirken. Diese kann als Druckmittelbeaufschlagung des Kolbens 114 gestaltet sein, die eine in Richtung der Feder wirkende Kraft erzeugt. Auf diese Weise ist das Schließglied 106 mit Hilfe des Antriebes 110 auf Positionen in axialer Richtung bringbar, die zwischen Schließstellung und Offenstellung gelegen sind und somit Zwischenstellungen des Schließglieds 106 ergeben.

Das Ventil 100 umfasst eine fluidundurchlässige Membran 200, die so angeordnet und gestaltet ist, dass sie den Kontakt von Produkt, welches durch einen der Anschlüsse 102 und 104 in das Ventilgehäuse 160 eintritt, mit der Umgebung des Ventils 100 im Bereich einer durch das Ventilgehäuse 160 hindurchgeführten Schließgliedanordnung 126 verhindert. Die für Produkt nicht permeable Membran 200 ist von der das Schließglied 106 umfassenden Schließgliedanordnung 126 durchsetzt und an der Schließgliedanordnung 126 und ventilgehäuseseitig in einer Halteanordnung 120 abgedichtet gehaltert.

Um einen einfachen Aufbau mit schneller Montierbarkeit zu erreichen, kann die Schließgliedanordnung 126 mehrere miteinander verbindbare Teile umfassen, beispielsweise das Schließglied 106, ein optionales Distanzstück 116 und ein zweites Entkopplungselement 136. An der Verbindungsstelle von Distanzstück 116 oder Schließglied 106 mit dem Entkopplungselement 136 kann ein Klemmbereich 142 vorgesehen sein, in dem die Membran 200 zwischen Schließglied 106 und Entkopplungselement 136 eingeklemmt ist. Die Klemmwirkung ist so bemessen, dass eine Dichtwirkung gegen Hindurchtreten von Produkt erzielt wird.

Vorteilhaft ist es, in einer Weiterbildung die Klemmwirkung so zu bemessen, dass die Membran 200 bei Bewegung des Schließgliedes 106 von Offenstellung in Schließstellung keine durch Produktverschleppung in den Klemmbereich 142 spürbare Bewegung innerhalb des Klemmbereichs 142 ausführt.

Die Schließgliedanordnung 126 kann eine zweite Stützfläche 192 umfassen, auf welcher die Membran 200 in wenigstens einer Stellung des Schließgliedes 106 aufliegt. Solch eine Abstützung der Membran 200 verringert die Belastung durch einwirkende Kräfte, die beispielsweise durch unter Druck stehendes Fluid erzeugt wird und erhöht auf diese Weise die Lebensdauer der Membran 200.

Die beispielsweise wendelförmig ausgebildete Feder 112 des Antriebs 110 bewirkt ein Torsionsmoment, welches bei direkter Verbindung des Antriebs 110 mit der Schließgliedanordnung 126 auf diese und das Schließglied 106 übertragen wird. Aufgrund ihrer Halterung an der Schließgliedanordnung 126 wird das Torsionsmoment auch auf die Membran 200 übertragen. Durch das eingeleitete Torsionsmoment und die gehäuseseitige Halterung entstehen zusätzliche Verformung und Verspannung der Membran 200, so dass die Lebensdauer der Membran 200 verringert wird. Außerdem wird durch Krafteinleitung in die Halterungen die dortige Abdichtung belastet.

Daher ist es eine vorteilhafte Weiterbildung, zwischen dem Befestigungspunkt der Membran 200 an der Schließgliedanordnung 126 und dem Antrieb 110 eine Drehentkopplungseinrichtung 130 vorzusehen. Durch die Drehentkopplungseinrichtung 130 wird verhindert, dass das vom Antrieb 110 bewirkte Torsionsmoment in die Membran 200 eingeleitet wird. Somit wird die Lebensdauer erhöht und die Belastung der Abdichtung verringert.

Die Drehentkopplungseinrichtung 130 umfasst beispielsweise ein erstes Entkopplungselement 132, welches mit dem Antrieb 110 verbunden ist. Das erste Entkopplungselement 132 weist eine zylindrische Aufnahme 134 auf, in die ein zylindrischer Fortsatz 138 einem zweiten Entkopplungselements 136 eintaucht, welches Teil der Schließgliedanordnung 126 ist.

Ein Sicherungselement 140 ist so gestaltet, dass es die Verdrehung von dem ersten Entkopplungselement 132 gegen das zweite Entkopplungselement 136 zulässt, während eine axiale Bewegung der Entkopplungselemente 132 und 136 relativ zueinander unterbunden wird.

Das Sicherungselement 140 kann beispielsweise wie folgt geformt sein: Der zylindrische Fortsatz 138 weist eine umlaufende Nut auf. In diese greift eine Sicherung ein, welche so gestaltet ist, dass eine axiale Bewegung des zylindrischen Fortsatzes 138 relativ zur zylindrischen Aufnahme 134 verhindert wird. Die Sicherung kann relativ zur und in Umfangsrichtung der Nut bewegt werden, so dass die Verdrehung der Elemente ermöglicht ist. Eine im Wesentlichen u-förmige Scheibe, deren Dicke weitgehend der Weite der Nut entspricht, ist ein Beispiel für solche Gestaltung. Der Vorteil eines solcherart gestalteten Sicherungselements ist der sehr geringe Verschleiß, der an Verschleißfreiheit grenzt.

Eine ventilgehäuseseitige Halteanordnung 120 umfasst das Ventilgehäuse 160 und ein zweites Gehäuseteil 162, welche zusammen die Membran 200 haltern. Vorteilhaft kann die Halteanordnung 120 eine erste Stützfläche 190 und einen Kanal 180 umfassen.

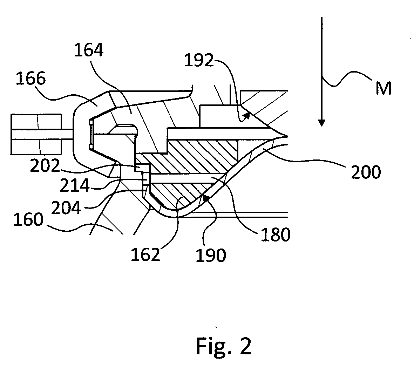

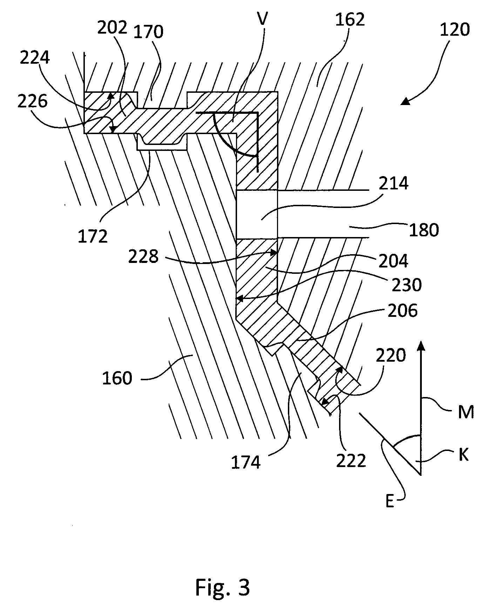

Aufbau und Funktion sowie Weiterbildungen der Halteanordnung 120 werden nachfolgend anhand der **Fig. 2** und **Fig. 3** näher erläutert.

Die Halteanordnung 120 des Ausführungsbeispiels umfasst einen geeignet geformten Teil des Ventilgehäuses 160 und das zweite Gehäuseteil 162. Beide besitzen wenigstens stückweise komplementär zueinander geformte Konturen, zwischen denen Spalte entstehen, in denen im montierten Zustand des Ventils 100 Abschnitte der Membran 200, insbesondere erster Abschnitt 202 und zweiter Abschnitt 204, angeordnet sind.

Die am Ventilgehäuse 160 befindliche Kontur ist an einer Öffnung des Gehäuses und diese Öffnung umgebend angeordnet. Die Öffnung ist mit einem Deckel 164 verschlossen, mit welchem der Antrieb 110 mittelbar oder unmittelbar verbunden ist. Wenigstens eines der Bauteile, die eine Verbindung von Schließglied 106 und Antrieb 110 schaffen, beispielsweise das zweite Entkopplungselement 136, durchsetzt den Deckel 164.

Der Deckel 164 berührt das zweite Gehäusebauteil 162 und wird mittels eines Verbindungselements am Ventilgehäuse 160 fixiert. Das Verbindungselement kann eine Schraubverbindung sein und ist im gezeigten Beispiel als Klammer 166 ausgeformt. Durch die Klammer 166 werden Deckel 164 und zweites Gehäuseteil 162 in axialer Richtung M gegeneinander gespannt. Hierdurch wird eine Kraft auf das zweite Gehäuseteil 162 bewirkt, so dass mit einer mittelbaren Kraft die Klemmung der Membran 200 zwischen Ventilgehäuse 160 und zweitem Gehäuseteil 162 entsteht.

Der bereits zu **Fig. 1** als vorteilhafte Weiterbildung erwähnte Kanal 180 kann im zweiten Gehäusebauteil 162 ausgeformt sein, beispielsweise radial nach innen in Richtung des zweiten Entkopplungselements 136, und mit einem Durchlass 214 in der Membran 200 zusammenwirken. Sollte Produkt bis in den Zwischenraum zwischen Membran 200 und Ventilgehäuse 160 gelangen, kann es durch den Durchlass 214 und den Kanal 180 aus dem Raum zwischen Ventilgehäuse 160 und zweitem Gehäuseteil 162 abgeführt werden.

Die Konturen werden gebildet durch Wände, wie aus der Detailansicht in **Fig. 3** besser zu entnehmen ist.

Die Kontur am zweiten Gehäuseteil 162 ist gebildet durch eine erste Klemmspaltwand 220, eine erste Führungswand 228 und eine erste Wand 224, welche aneinander grenzen und in unterschiedlichem Winkel zueinander stehen.

Die Kontur im Ventilgehäuse 160 wiederum ist gebildet aus einer zweiten Klemmspaltwand 222, einer zweiten Führungswand 230 und einer zweiten Wand 226, weiche ebenfalls aneinander grenzen und in unterschiedlichem Winkel zueinander stehen.

Erste Klemmspaltwand 220 und zweite Klemmspaltwand 222 sind als Paar angeordnet und begrenzen einen Klemmspalt, in welchem ein Klemmabschnitt 206 der Membran 200 geklemmt ist. Die Klemmung ist so ausgeführt, dass neben der örtlichen Festlegung eine Abdichtung zwischen Klemmabschnitt 206 und Klemmspaltwand 222 bewirkt ist. Der Klemmspalt besitzt im Schnittbild eine Erstreckungsrichtung E, die in einem Winkel K zur axialen Richtung M ausgerichtet ist. Dieser Winkel K kann vorzugsweise aus dem Bereich zwischen 30° und 60°, vorzugsweise 45°, sein. Dies verringert die Belastung der Membran 200.

Ein erster Abschnitt 202 der Membran 200 befindet sich in einem zwischen erster Wand 224 und zweiter Wand 226 gebildeten ersten Spalt. Die Anordnung ist dabei so bemessen, dass die mittelbar auf das zweite Gehäuseteil 162 ausgeübte Kraft eine Klemmung des ersten Abschnitts 202 zwischen erster Wand 224 und zweiter Wand 226 bewirkt.

Ein zweiter Abschnitt 204 der Membran 200 befindet sich in einem zwischen der ersten Führungswand 228 und der zweiten Führungswand 230 gebildeten zweiten Spalt. Es kann eine Klemmung bewirkt sein, der zweite Abschnitt 204 ist jedoch wenigstens durch die Wände 228 und 230 geführt.

Aus der Ausrichtung der Wände 224, 226, 228 und 230 ergibt sich eine Anordnung von erstem Abschnitt 202 und zweitem Abschnitt 204 in einem Winkel V zueinander. Dieser Winkel V ist so bemessen, dass aus erstem Abschnitt 202, zweitem Abschnitt 204 und den Wänden 224, 226, 228 und 230 ein Formschluss gebildet ist und auf diese Weise die Membran 200 formschlüssig in der Halteanordnung 120 festgelegt ist.

Dieser Formschluss verhindert eine Bewegung der Membran 200 auch dann, wenn die auf sie einwirkenden Kräfte geeignet sind, die Reibung zwischen Membran 200 und den Gehäuseteilen 160 und 162, insbesondere zwischen den Abschnitten 202, 204 und 206 der Membran und den Wänden 220, 222, 224, 226, 228 und 230, zu überwinden.

Für die Ausrichtung der Wände 224, 226, 228 und 230 in Bezug zur axialen Richtung M und zur Wahl des Winkels V gibt es einige vorteilhafte Gestaltungsmöglichkeiten, die einzeln oder in Kombination gewählt werden können.

Die Wände können so geformt sein, dass der Winkel V zwischen erstem Abschnitt 202 und zweitem Abschnitt 204 zwischen 60° und 135° beträgt. Dies bewirkt einen guten Formschluss und hält gleichzeitig die Materialbelastung durch Verformung bei Herstellung der Membran 200 oder bei Einbau einer abweichend vorgeformten Membran 200 in die Halteanordnung 120 gering.

Gemäß einer nächsten Gestaltungsmöglichkeit ist vorgesehen, den ersten Abschnitt 202 in einer zur axialen Richtung M etwa senkrechten Ebene anzuordnen. Ist die Membran 200 auf dieser Weise sich im ersten Abschnitt 202 im Wesentlichen flach radial nach außen erstreckend angeordnet, auch unter Duldung einiger Winkelgrade Abweichung, ergibt sich ein kostengünstiger Aufbau mit leicht einstellbaren Klemmkräften.

Die nächste Gestaltungsmöglichkeit sieht vor, den zweiten Abschnitt 204 im Wesentlichen zylindrisch mit einer Zylinderachse zu formen, wobei die Zylinderachse in axialer Richtung M orientiert ist, worin Abweichungen im Rahmen von Fertigungsgenauigkeiten und einige Winkelgrade Abweichung eingeschlossen sind. Dies führt zu einer kostengünstig herstellbaren Halteanordnung 120 mit guten Führungseigenschaften für den zweiten Abschnitt 204.

Vorteilhaft kann gemäß Weiterbildung der Durchlass 214 im zweiten Abschnitt 204 und damit zwischen zwei geklemmten Abschnitten 202 und 206 der Membran 200 vorgesehen sein. Dies erlaubt nicht nur Produktleckage festzustellen, sondern auch die Problemstelle einzugrenzen, bevor die Abdichtung und Halterung der Membran 200 vollkommen versagt hat.

Die Festlegung der Membran 200 kann durch die nachfolgenden Maßnahmen verbessert werden. Eine erste Erhebung 170 kann auf der ersten Wand 224 vorgesehen sein, der im Zuge der Montage in den ersten Abschnitt 202 der Membran 200 hineingepresst wird. Alternativ oder zusätzlich kann eine Nut 172 auf der zweiten Wand 226 vorgesehen sein, in die sich der erste Abschnitt 202 unter Einwirken der Klemmkraft hineinformt. Es kann auch lediglich eine Nut auf der ersten Wand 224 vorgesehen sein. Auch im Klemmspalt kann auf einer der Klemmspaltwände 220 und 222 wenigstens eine Nut oder ein Vorsprung vorgesehen sein, beispielsweise eine zweite Erhebung 174 auf der zweiten Klemmspaltwand 222.

Mit Hilfe von Nut oder Erhebung, deren Anzahl und Abmessungen in Abstimmung mit dem Material der Membran 200 festgelegt werden, sind Strukturen geschaffen, die die Reibung der Membran 200 im durch die jeweilige Paarung der Wände 220, 222, 224, 225, 228 und 230 gebildeten Spalt erhöhen. Auf diese Weise wird die Membran 200 noch besser durch erhöhten Reibschluss oder bis in den Formschluss gehende "Verzahnung" von Membran 200 und Spalt in ihrer Position festgelegt und die Dichtheit erhöht.

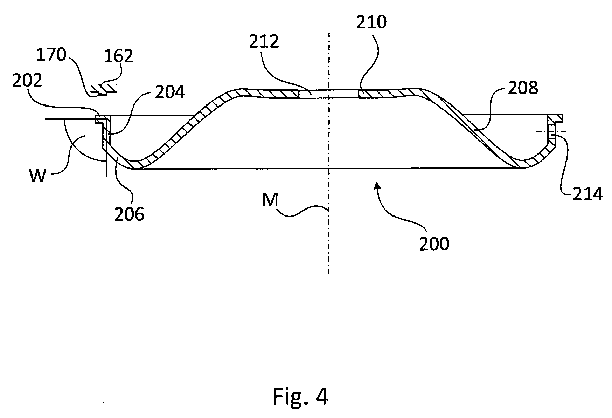

In **Fig. 4** ist die Membran 200 als vorgeformtes Bauteil gezeigt. Vorgeformt bedeutet, dass die einzelnen Abschnitte durch bleibendes Umformen des Membranrohlings vor Einbau in das Ventil 100 ausgebildet sind. Das Material der Membran 200 ist so gewählt, dass bei Betrieb des Ventils 100 eine Verformung der Membran 200 durch Bewegen des Schließgliedes möglich ist.

Die Membran 200 des dargestellten Beispiels weist mehrere radial benachbarte Abschnitte auf.

Der erste Abschnitt 202 ist am radial außen liegenden Rand vorgesehen. Er kann sich im Wesentlichen in einer zur axialen Richtung M normalen Ebene erstreckend geformt sein. Der zweite Abschnitt 204 schließt sich radial innerhalb des ersten Abschnitts 202 an diesen an. Dieser kann im Wesentlichen zylindrisch mit einer Zylinderachse geformt sein, wobei die Zylinderachse in axialer Richtung M orientiert ist, worin Abweichungen im Rahmen von Fertigungsgenauigkeiten und einige Winkelgrade Abweichung eingeschlossen sind.

Erster Abschnitt 202 und zweiter Abschnitt 204 sind in einem Winkel W zueinander orientiert, welcher auf jeden Fall von 180° verschieden ist und vorzugsweise im Bereich zwischen 60° und 135° liegt. Er kann zur einfachen Herstellung 90° betragen, wovon wenige Winkelgraden Abweichung noch erfasst sind. Dieser vorgeformte Winkel W kann von dem Winkel V der Halteanordnung abweichen. Eine besonders leichte und sichere Montierbarkeit wird erreicht, wenn sich die Winkel W und V bis auf wenige Winkelgrade nahekommen, beispielsweise eine Abweichung von weniger als 10° besitzen. Dies reduziert zudem die durch Verformung im Einbau entstehende Materialbelastung.

An den zweiten Abschnitt 204 schließt sich wiederum radial innenliegend ein dritter Abschnitt an, der dem oben genannten Klemmabschnitt 206 entspricht. Dieser bildet etwa einen Konus aus und ist damit so geformt, dass er zwischen der ersten Klemmspaltwand 220 des zweiten Gehäuseteils 162 und der zweiten Klemmspaltwand 222 des Ventilgehäuses 160 einklemmbar ist.

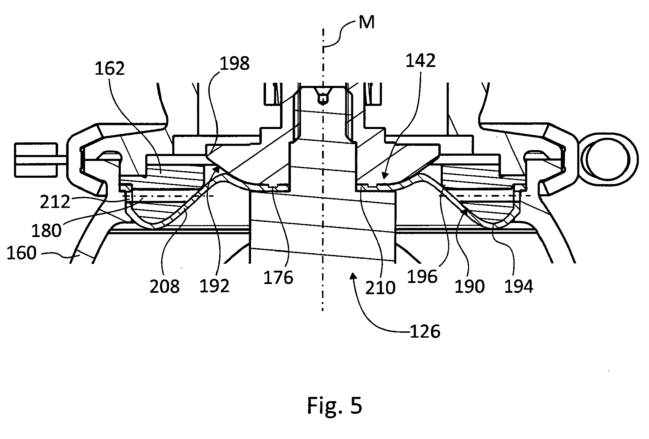

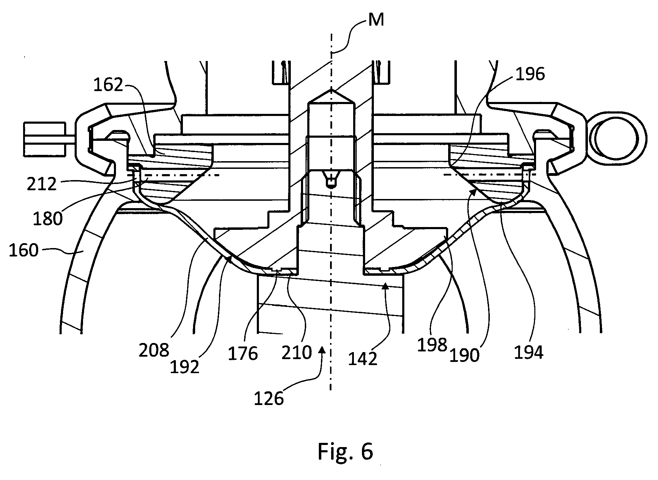

Dem Klemmabschnitt 206 radial nach innen folgend ist ein vierter Abschnitt 208 vorgesehen. In diesem ist der Verlauf der Membran 200 den größten Veränderungen bei Bewegung des Schließgliedes 106 durch den Antrieb 110 unterworfen. Auf diesen vierten Abschnitt 208 wirken zudem Kräfte ein, wenn das Produkt unter Druck steht. Um die Belastung durch solche Kräfte zu verringern, ist dieser Abschnitt so vorgeformt, dass er mit den Stützflächen 190 und 192 in geöffneter oder geschlossener Ventilstellung zusammenwirkt. Dies wird anhand der Fig. 5 und 6 noch erläutert werden.

Ein fünfter Abschnitt 210 schließt an den vierten Abschnitt 208 radial innenliegend an und erstreckt sich in einer zur axialen Richtung M im Wesentlichen senkrechten Ebene. Dieser fünfte Abschnitt 210 umgibt eine Zentralöffnung 212, durch die das zweite Entkopplungselement 136 oder ein damit verbundenes Bauteil hindurchführbar ist. Auf diese Weise ist der fünfte Abschnitt 210 an der Schließgliedanordnung 126 klemmbar ausgeführt, vorzugsweise in axialer Richtung M, wodurch einerseits eine Festlegung und andererseits eine Abdichtung bewirkt werden.

Vorzugsweise wird für die Membran 200 ein Material hoher Formstabilität und mit einer Temperaturbeständigkeit von wenigstens 130°C eingesetzt. Durch die Formstabilität ist es möglich, auf mit der Membran 200 verbundene Stützmittel, bspw. Stützmembranen, zu verzichten. Vorzugsweise weist das Material eine hohe Medienbeständigkeit auf. Insbesondere soll es ein geringes Kriechverhalten aufweisen, vorzugsweise eine Kompressibilität von wenigstens 20%, besser 25%, vorteilhaft mehr als 30% nach ASTM F36 besitzen. Es kann sich beispielsweise um einen Verbund von mehreren, Polytetrafluorethylen (PTFE) enthaltenden Schichten handeln, wobei wenigstens eine der Schichten einen Füllstoff enthält, beispielsweise Siliziumoxid.

Die **Fig. 5** und **Fig. 6** dienen zur Veranschaulichung der Verformung der Membran 200 im Betrieb des Ventils 100 und als Grundlage zur Erläuterung der vorteilhaften Stützflächen 190 und 192.

Die Offenstellung des Ventils 100, in der das Schließglied 106 vom Ventilsitz 108 abgehoben und somit beabstandet ist, um eine Fluidverbindung zwischen den Anschlüssen 102 und 104 zu schaffen, ist in **Fig. 5** dargestellt. Die Schließstellung mit unterbrochener Fluidverbindung ist in **Fig. 6** gezeigt.

In der Offenstellung gemäß **Fig. 5** ist die Schließgliedanordnung 126 in axialer Richtung M zum Antrieb 110 hin verschoben. Der vierte Abschnitt 208 der Membran 200 liegt mit einem Teil seiner Erstreckung auf der ersten Stützfläche 190 des zweiten Gehäuseteils 162 auf. Die erste Stützfläche 190 weist ein Extremum 194 auf, an dem der vierte Abschnitt 208 ebenfalls anliegt und von dort ohne Knicke und Sprungstellen stetig in den Klemmabschnitt 206 übergeht. Radial innenliegend endet die erste Stützfläche 190 und damit die Unterstützung in einem Rand 196, der vorteilhaft abgerundet geformt ist. Erster Rand 196 und Extremum 194 und somit der Flächeninhalt der ersten Stützfläche 190 können so bemessen sein, dass in der Offenstellung wenigsten 50% der Membranfläche von wenigstens einer der Stützflächen 190 und 192 oder der Summe der Stützflächen 190 und 192 unterstützt ist.

In der Schließstellung gemäß **Fig. 6** liegt der vierte Abschnitt 208 der Membran 200 auf der sich bis zu einem zweiten Rand 198 erstreckenden ersten Stützfläche 190 an der Schließgliedanordnung 126 an. Ventilgehäuseseitig liegt der vierte Abschnitt 208 am Extremum 194 an. Die Lage von zweitem Rand 198 und Extremum 194 kann so bemessen sein, dass auch in dieser Stellung wenigstens 50% der Membranfläche von wenigstens einer der Stützflächen 190 und 192 oder der Summe der Stützflächen 190 und 192 unterstützt ist.

Durch die Anlage der Membran 200 am Extremum 194 in beiden Stellungen der Schließgliedanordnung 126 wird der Einfluss der Verformung auf den im Klemmspalt geklemmten dritten Abschnitt 206 so gering wie möglich gehalten. Insbesondere werden quer zum Verlauf des Klemmspalts gerichtete Kräfte auf die Membran 200 vermieden, da die Membran am freien Ende des Klemmspalts weitgehend ohne Richtungsänderung verläuft.

In **Fig. 5** und **Fig. 6** ist eine vorteilhafte Ausführung der Halterung der Membran 200 an der Schließgliedanordnung 126 dargestellt. Der fünfte Abschnitt 210 der Membran 200 ist in einem Klemmbereich 142 zwischen zwei Bauteilen der Schließgliedanordnung 126 eingeklemmt. Diese Klemmung kann im Wesentlichen in einer Ebene senkrecht zur axialen Richtung M ausgeführt sein. Zusammen mit der zweiten Stützfläche 192, die gekrümmt ist und zur Mitte hin in die Ebene der Klemmung übergehend ausgeführt ist, ergibt sich eine geringe Belastung des fünften Abschnitts 210 bei Bewegung der Schließgliedanordnung 126. Mit einem an der Schließgliedanordnung 126 vorgesehenen und umlaufenden Vorsprung 176, der in den fünften Abschnitt 210 der Membran 200 gedrückt wird, können Halterung und Abdichtung zusätzlich verbessert werden.

Die Erfindung wurde anhand eines Einsitzventils vorgestellt, ist jedoch nicht auf die Anwendung in diesem Ventiltyp beschränkt. Auch in Ventilen, die mehrere Dichtungen am Schließglied aufweisen, so genannte doppeldichte Ventile, oder in Umschaltventilen sowie in Doppelsitzventilen mit mehreren Schließgliedern ist die Erfindung sinnvoll anwendbar, um ein Schließglied gegen das Ventilgehäuse dort abzudichten, wo die Schließgliedanordnung an den Antrieb angebunden ist. Anhand der vorgestellten Funktionsweise erschließen sich dem Fachmann auf dem Gebiet der Ventiltechnik die möglichen Anwendungen in den Ventilen der Lebensmittel- und Prozesstechnologie.

### Bezugszeichenliste

- 100: Ventil
- 102: erster Anschluss
- 104: zweiter Anschluss
- 106: Schließglied
- 108: Ventilsitz
- 110: Antrieb
- 112: Feder
- 114: Kolben
- 116: Distanzstück
- 120: Halteanordnung
- 126: Schließgliedanordnung
- 130: Drehentkopplungseinrichtung
- 132: erstes Entkopplungselement
- 134: zylindrische Aufname
- 136: zweites Entkopplungselement
- 138: zylindrischer Fortsatz
- 140: Sicherungselement
- 142: Klemmbereich
- 160: Ventilgehäuse
- 162: zweites Gehäuseteil
- 164: Deckel
- 166: Klammer
- 170: erste Erhebung
- 172: Nut
- 174: zweite Erhebung
- 176: Vorsprung in Zentralklemmung
- 180: Kanal
- 190: erste Stützfläche
- 192: zweite Stützfläche
- 194: Extremum
- 196: erster Rand
- 198: zweiter Rand
- 200: Membran
- 202: erster Abschnitt
- 204: zweiter Abschnitt
- 206: Klemmabschnitt
- 208: vierter Abschnitt
- 210: fünfter Abschnitt
- 212: Zentralöffnung
- 214: Durchlass
- 220: erste Klemmspaltwand
- 222: zweite Klemmspaltwand
- 224: erste Wand
- 226: zweite Wand
- 228: erste Führungswand
- 230: zweite Führungswand
- M: axiale Richtung
- V: Winkel zwischen erstem und zweitem Abschnitt
- W: vorgeformter Winkel zwischen erstem und zweitem Abschnitt
- K: Winkel zwischen axialer Richtung und Klemmabschnitt
- E: Erstreckungsrichtung

## Patentansprüche

1. Ventil (100) mit einem Ventilgehäuse (160), welches einen ersten Anschluss (102) und einen zweiten Anschluss (104) aufweist, einem Schließglied (106), welches entlang einer axialen Richtung bewegbar und in eine Schließstellung bringbar ist, in der das Schließglied (106) mit einem zwischen erstem Anschluss (102) und zweitem Anschluss (104) angeordneten Ventilsitz (108) dichtend zusammenwirkt, wodurch eine Fluidverbindung zwischen erstem und zweitem Anschluss (102, 104) unterbunden ist, einer fluidundurchlässigen Membran (200), welche eine von einer das Schließglied (106) umfassenden Schließgliedanordnung (126) durchsetzte Zentralöffnung (212) und einen in einem schräg zur axialen Richtung ausgerichteten Klemmspalt verlaufenden Klemmabschnitt (206) umfasst und welche an der Schließgliedanordnung (126) einerseits und einer ventilgehäuseseitigen Halteanordnung (120) andererseits mit Dichtwirkung gehaltert ist, wobei die Membran (200) einen an einem äußeren Rand befindlichen ersten Abschnitt (202) und einen sich an den ersten Abschnitt (202) radial innen anschließenden zweiten Abschnitt (204) aufweist, wobei der erste Abschnitt kraftschlüssig in der Halteanordnung gehaltert ist, wobei der zweite Abschnitt in der Halteanordnung geführt ist, und wobei erster und zweiter Abschnitt (202, 204) derart in einem Winkel (V) zueinander angeordnet sind und die Halteanordnung so angepasst ist, dass durch ersten Abschnitt (202), zweiten Abschnitt (204) und Halteanordnung ein Formschluss gebildet ist, **dadurch gekennzeichnet, dass** an den zweiten Abschnitt (204) sich radial innenliegend ein dritter Abschnitt anschließt, der dem Klemmabschnitt (206) entspricht.

2. Ventil (100) nach Anspruch 1, **dadurch gekennzeichnet, dass** der Winkel (V) zwischen 60 Grad und 135 Grad beträgt.

3. Ventil (100) nach Anspruch 1 oder 2, **dadurch gekennzeichnet, dass** der erste Abschnitt (202) in einer zur axialen Richtung (M) senkrechten Ebene angeordnet ist.

4. Ventil (100) nach Anspruch 1 oder 2, **dadurch gekennzeichnet, dass** der zweite Abschnitt (204) zylindrisch mit einer Zylinderachse geformt und die Zylinderachse in axialer Richtung (M) orientiert ist.

5. Ventil (100) nach einem der vorhergehenden Ansprüche, **dadurch gekennzeichnet, dass** die Membran (200) zwischen Klemmabschnitt (206) und erstem Abschnitt (202) wenigstens einen Durchlass (214) aufweist, der mit einem in der ventilgehäuseseitigen Halteanordnung (120) ausgebildeten Kanal (180) zusammenwirkt.

6. Ventil (100) nach einem der vorhergehenden Ansprüche, **dadurch gekennzeichnet, dass** die Halteanordnung (120) einen ersten Spalt, in welchem der erste Abschnitt (202) kraftschlüssig gehaltert ist, und einen zweiten Spalt, in welchem der zweite Abschnitt (204) geführt ist, aufweist.

7. Ventil (100) nach Anspruch 6, **dadurch gekennzeichnet, dass** der erste Spalt von einer ersten Wand (224) und einer zweiten Wand (226) gebildet ist und wenigstens eine der Wände eine Struktur (170; 172) aufweist, die die Reibung der Membran (200) im Spalt erhöht.

8. Ventil (100) nach einem der vorhergehenden Ansprüche, **dadurch gekennzeichnet, dass** der Klemmspalt von einer ersten Klemmspaltwand (220) und einer zweiten Klemmspaltwand (222) gebildet ist und wenigstens eine der Klemmspaltwände eine Wandstruktur (174) aufweist, die die Reibung der Membran (200) im Klemmspalt erhöht.

9. Ventil (100) nach einem der vorhergehenden Ansprüche, **dadurch gekennzeichnet, dass** ein druckmittelbetreibbarer Antrieb (110) vorgesehen ist, welcher mit Schließgliedanordnung (126) verbunden ist.

10. Ventil (100) nach Anspruch 9, **dadurch gekennzeichnet, dass** im Antrieb (110) oder zwischen Antrieb (110) und Schließgliedanordnung (126) eine Drehentkopplungseinrichtung (130) angeordnet ist.

11. Ventil (100) nach Anspruch 10, **dadurch gekennzeichnet, dass** die Drehentkopplungseinrichtung (130) zwischen Antrieb (110) und Schließgliedanordnung (126) angeordnet ist und ein erstes Entkopplungselement (132) mit einer zylindrischen Aufnahme (134) umfasst, in der ein zylindrischer Fortsatz (138) eines zweiten Entkopplungselements (136) aufgenommen ist.

12. Ventil (100) nach einem der vorhergehenden Ansprüche, **dadurch gekennzeichnet, dass** zum Abstützen der Membran (200) ventilgehäuseseitig eine erste Stützfläche (190) und an der Schließgliedanordnung (126) eine zweite Stützfläche (192) vorgesehen sind.

13. Ventil (100) nach Anspruch 12, **dadurch gekennzeichnet, dass** in einer Offenstellung des Ventils (100), in der eine Fluidverbindung zwischen erstem Anschluss (102) und zweitem Anschluss (104) hergestellt ist, und der Schließstellung des Ventils (100) die Membran (200) auf je einer der Stützflächen (190, 192) aufliegt und insgesamt zu wenigstens 50% ihrer Fläche abgestützt ist.

14. Ventil (100) nach einem der vorhergehenden Ansprüche, **dadurch gekennzeichnet, dass** die Membran (200) eine Kompressibilität von wenigstens 20% nach ASTM F36 aufweist.

15. Membran (200) für ein Ventil (100) der Lebensmittel- oder Prozesstechnologie, welches ein Ventilgehäuse (160), eine Schließgliedanordnung (126), eine ventilgehäuseseitige Halteanordnung (120) zum Haltern der Membran (200) und einen schräg zu einer axialen Richtung verlaufenden Klemmspalt zum Klemmen der Membran (200) umfasst, wobei die Membran (200) einen zur Aufnahme im Klemmspalt geeigneten konischen Abschnitt (206) und eine von der Schließgliedanordnung (126) durchsetzbare Zentralöffnung (212) aufweist, wobei an einem radial äußeren Rand der Membran ein erster Abschnitt (202) vorgesehen ist, an dem sich radial innen ein zweiter Abschnitt (204) anschließt, welcher in einem vorgeformten Winkel (W) zu dem ersten Abschnitt (202) steht, der so bemessen ist, dass erster Abschnitt (202) und zweiter Abschnitt (204) unter Ausbildung eines Formschlusses in der Halteanordnung (120) aufnehmbar sind, **dadurch gekennzeichnet, dass** an den zweiten Abschnitt (204) sich radial innenliegend ein dritter Abschnitt anschließt, der dem konischen Abschnitt (206) entspricht, und, **dass** im zweiten Abschnitt (202) wenigstens ein Durchlass (214) vorgesehen ist.

16. Membran (200) nach Anspruch 15, **dadurch gekennzeichnet, dass** der vorgeformte Winkel (W) zwischen 60 Grad und 135 Grad beträgt.

17. Membran (200) nach der Ansprüche 15 bis 16, **dadurch gekennzeichnet, dass** die Membran (200) eine Kompressibilität von wenigstens 20% nach ASTM F36 aufweist.

## Claims

1. A valve (100) with a valve housing (160) that has a first port (102) and a second port (104), with a closing member (106) which is movable along an axial direction and can be brought into a closed position in which the closing member (106) interacts sealingly with a valve seat (108) arranged between the first port (102) and second port (104), whereby a fluid connection is blocked between the first and second port (102, 104), with a fluid-impermeable diaphragm (200) that comprises a central opening (212) penetrated by a closing member arrangement (126) comprising the closing member (106) and a clamping section (206) in a clamping gap aligned obliquely to the axial direction, and that is held with a sealing effect, on the one hand, on the closing member arrangement (126) and, on the other hand, on a valve-housing-side holding arrangement (120), wherein the diaphragm (200) has a first section (202) located on an outer edge, and a second section (204) abutting the first section (202) radially to the inside, wherein the first section is held in a force fit in the holding arrangement, wherein the second section is guided in the holding arrangement, wherein the first and second section (202, 204) are arranged at an angle (V) relative to each other, and the holding arrangement is adapted so that a form fit is formed by the first section (202), second section (204) and holding arrangement, **characterized in that** a third section corresponding to the clamping section (206) abuts the second section (204) radially to the inside.

2. The valve (100) according to claim 1, **characterized in that** the angle (V) is between 60 degrees and 135 degrees.

3. The valve (100) according to claim 1 or 2, **characterized in that** the first section (202) is arranged in a plane perpendicular to the axial direction (M).

4. The valve (100) according to claim 1 or 2, **characterized in that** the second section (204) is shaped cylindrically with a cylinder axis, and the cylinder axis is oriented in the axial direction (M).

5. The valve (100) according to one of the prior claims, **characterized in that** the diaphragm (200) has a least one passage (214) between the clamping section (206) and first section (202) that interacts with a channel (180) formed in the valve-housing-side holding arrangement (120).

6. The valve (100) according to one of the prior claims, **characterized in that** the holding arrangement (120) has a first gap in which the first section (202) is held in a force fit, and a second gap in which the second section (204) is guided.

7. The valve (100) according to claim 6, **characterized in that** the first gap is formed by a first wall (224) and a second wall (226), and at least one of the walls has a structure (170; 172) that increases the friction of the diaphragm (200) in the gap.

8. The valve (100) according to one of the prior claims, **characterized in that** the clamping gap is formed by a first clamping gap wall (220) and a second clamping gap wall (222), and at least one of the clamping gap walls has a wall structure (174) that increases the friction of the diaphragm (200) in the clamping gap.

9. The valve (100) according to one of the prior claims, **characterized in that** a pressurizing medium-operated drive (110) is provided that is connected to the closing member arrangement (126).

10. The valve (100) according to claim 9, **characterized in that** a rotary decoupling apparatus (130) is arranged in the drive (110), or between the drive (110) and the closing member arrangement (126).

11. The valve (100) according to claim 10, **characterized in that** the rotary decoupling apparatus (130) is arranged between the drive (110) and the closing member arrangement (126) and comprises a first decoupling member (132) with a cylindrical seat (134) in which a cylindrical projection (138) of a second decoupling member (136) is accommodated.

12. The valve (100) according to one of the prior claims, **characterized in that** a first support surface (190) is provided at the valve housing side, and a second support surface (192) is provided on the closing member arrangement (126) to support the diaphragm (200).

13. The valve (100) according to claim 12, **characterized in that** in an open position of the valve (100) in which a fluid connection is established between a first port (102) and a second port (104), and in the closed position of the valve (100), the diaphragm (200) lies on one of the support surfaces (190, 192), and at least 50% overall of its surface is supported.

14. The valve (100) according to one of the prior claims, **characterized in that** the diaphragm (200) has a compressibility of at least 20% according to ASTM F36.

15. A diaphragm (200) for a valve (100) in the food or processing technology, that comprises a valve housing (160), a closing member arrangement (126), a valve-housing-side holding arrangement (120) for holding the diaphragm (200) and a clamping gap for clamping the diaphragm (200) running obliquely to an axial direction, wherein the diaphragm (200) has a conical section (206) suitable for being accommodated in the clamping gap and a central opening (212) which the closing member arrangement (126) can penetrate, wherein a first section (202) is provided on a radial outer edge of the diaphragm against which a second section (204) abuts radially to the inside that is at a preformed angle (W) to the first section (202) which is dimensioned such that the first section (202) and second section (204) can be accommodated in the holding arrangement (120) while forming a form fit, **characterized in that** a third section corresponding to the conical section (206) abuts the second section (204) radially to the inside, and at least one passage (214) is provided in the second section (202).

16. The diaphragm (200) according to claim 15, **characterized in that** the preformed angle (W) is between 60 degrees and 135 degrees.

17. The diaphragm (200) according to claims 15 to 16, **characterized in that** the diaphragm (200) has a compressibility of at least 20% according to ASTM F36.

## Revendications

1. Soupape (100) avec une cage de soupape (160) qui présente une première connexion (102) et une deuxième connexion (104), un organe de fermeture (106) qui est mobile le long d'une direction axiale et qui peut être amené dans une position de fermeture dans laquelle l'organe de fermeture (106) coopère de façon étanche avec un siège de soupape (108) disposé entre la première connexion (102) et la deuxième connexion (104), ce qui fait qu'un raccordement fluidique est empêché entre la première et la deuxième connexion (102, 104), avec un diaphragme (200) imperméable aux fluides qui comprend une ouverture centrale (212) traversée par un dispositif d'organe de fermeture (126), comprenant l'organe de fermeture (106) et un tronçon de serrage (206) placé dans un interstice de serrage orienté obliquement par rapport à la direction axiale, et lequel est retenu avec une action d'étanchéité sur le dispositif d'organe de fermeture (126) d'un côté et un dispositif de retenue (120) côté cage de soupape d'un autre côté, le diaphragme (200) présentant un premier tronçon (202) situé sur un bord extérieur et un deuxième tronçon (204) se raccordant intérieurement radialement au premier tronçon (202), le premier tronçon étant retenu par liaison de force dans le dispositif de retenue, le deuxième tronçon étant guidé dans le dispositif de retenue, et le premier et le deuxième tronçon (202, 204) étant disposés en formant un angle (V) l'un par rapport à l'autre, et le dispositif de retenue étant adapté de telle sorte qu'une liaison de forme est formée par le premier tronçon (202), le deuxième tronçon (204) et le dispositif de retenue, **caractérisée en ce qu'**un troisième tronçon, qui correspond au tronçon de serrage (206), se raccorde, en étant à l'intérieur radialement, au deuxième tronçon (204).

2. Soupape (100) selon la revendication 1, **caractérisée en ce que** l'angle (V) est compris entre 60 degrés et 135 degrés.

3. Soupape (100) selon la revendication 1 ou 2, **caractérisée en ce que** le premier tronçon (202) est disposé dans un plan perpendiculaire à la direction axiale (M).

4. Soupape (100) selon la revendication 1 ou 2, **caractérisée en ce que** le deuxième tronçon (204) est formé cylindrique avec un axe de cylindre, et l'axe de cylindre est orienté dans la direction axiale (M).

5. Soupape (100) selon l'une des revendications précédentes, **caractérisée en ce que** le diaphragme (200) présente entre le tronçon de serrage (206) et le premier tronçon (202) au moins un passage (214) qui coopère avec un canal (180) constitué dans le dispositif de retenue (120) côté cage de soupape.

6. Soupape (100) selon l'une des revendications précédentes, **caractérisée en ce que** le dispositif de retenue (120) présente un premier interstice dans lequel le premier tronçon (202) est retenu par liaison de force, et un deuxième interstice dans lequel le deuxième tronçon (204) est guidé.

7. Soupape (100) selon la revendication 6, **caractérisée en ce que** le premier interstice est formé d'une première paroi (224) et d'une deuxième paroi (226), et au moins une des parois présente une structure (170 ; 172) qui augmente la friction du diaphragme (200) dans l'interstice.

8. Soupape (100) selon l'une des revendications précédentes, **caractérisée en ce que** l'interstice de serrage est formé d'une première paroi d'interstice de serrage (220) et d'une deuxième paroi d'interstice de serrage (222), et au moins une des parois d'interstice de serrage présente une structure de paroi (174) qui augmente la friction du diaphragme (200) dans l'interstice de serrage.

9. Soupape (100) selon l'une des revendications précédentes, **caractérisée en ce qu'**il est prévu un entraînement (110), pouvant être actionné par un moyen de pression, qui est raccordé au dispositif d'organe de fermeture (126).

10. Soupape (100) selon la revendication 9, **caractérisée en ce qu'**un dispositif de découplage de rotation (130) est disposé dans l'entraînement (110) ou entre l'entraînement (110) et le dispositif d'organe de fermeture (126).

11. Soupape (100) selon la revendication 10, **caractérisée en ce que** le dispositif de découplage de rotation (130) est disposé entre l'entraînement (110) et le dispositif d'organe de fermeture (126), et comprend un premier élément de découplage (132) avec une réception cylindrique (134) dans laquelle est logé un prolongement (138) cylindrique d'un deuxième élément de découplage (136).

12. Soupape (100) selon l'une des revendications précédentes, **caractérisée en ce que**, pour l'appui du diaphragme (200), il est prévu une première face d'appui (190) côté cage de soupape et une deuxième face d'appui (192) sur le dispositif d'organe de fermeture (126).

13. Soupape (100) selon la revendication 12, **caractérisée en ce que**, dans une position d'ouverture de la soupape (100) dans laquelle un raccordement fluidique est réalisé entre la première connexion (102) et la deuxième connexion (104), et la position de fermeture de la soupape (100), le diaphragme (200) repose sur respectivement une des faces d'appui (190, 192) et est appuyée au total à raison d'au moins 50 % de sa surface.

14. Soupape (100) selon l'une des revendications précédentes, **caractérisée en ce que** le diaphragme (200) présente une compressibilité d'au moins 20 % selon ASTM F36.

15. Diaphragme (200) pour une soupape (100) de la technologie des aliments ou des process qui comprend une cage de soupape (160), un dispositif d'organe de fermeture (126), un dispositif de retenue (120) côté cage de soupape pour la retenue du diaphragme (200) et un interstice de serrage placé obliquement par rapport à une direction axiale pour le serrage du diaphragme (200), le diaphragme (200) présentant un tronçon conique (206) approprié pour la réception dans l'interstice de serrage et une ouverture centrale (212) pouvant être traversée par le dispositif d'organe de fermeture (126), un premier tronçon (202) étant prévu sur un bord extérieur radialement du diaphragme, auquel se raccorde un deuxième tronçon (204) intérieur radialement qui forme avec le premier tronçon (202) un angle (W) préformé qui est dimensionné de telle sorte que le premier tronçon (202) et le deuxième tronçon (204) peuvent être logés dans le dispositif de retenue (120) avec formation d'un liaison de forme,
**caractérisé en ce**
**qu'**un troisième tronçon, situé à l'intérieur radialement, qui correspond au tronçon conique (206) se raccorde au deuxième tronçon (204), et
en ce qu'au moins un passage (214) est prévu dans le deuxième tronçon (202).

16. Diaphragme (200) selon la revendication 15, **caractérisé en ce que** l'angle (W) préformé est compris entre 60 degrés et 135 degrés.

17. Diaphragme (200) selon les revendications 15 à 16, **caractérisé en ce que** le diaphragme (200) présente une compressibilité d'au moins 20 % selon ASTM F36.
